# EUROPÄISCHE PATENTSCHRIFT

(11) **EP 2 785 554 B1**
(45) Veröffentlichungstag und Bekanntmachung des Hinweises auf die Patenterteilung: **25.10.2017**
(21) Anmeldenummer: 12791512.2
(22) Anmeldetag: 29.11.2012
(51) Int. Cl.: B60K 25/02, F16D 48/06, B60W 30/188, F02B 67/04, F02B 77/14, F16D 48/02

(54) **AGGREGATSYSTEM UND VERFAHREN ZUM BETREIBEN EINES AGGREGATSYSTEMS**
AGGREGATE SYSTEM AND METHOD FOR OPERATING AN AGGREGATE SYSTEM
SYSTÈME D'AGRÉGATES ET PROCÉDÉ D'OPÉRATION D'UN SYSTÈME D'AGRÉGATES

(30) Priorität: 30.11.2011 DE 102011119769
(43) Veröffentlichungstag der Anmeldung: 08.10.2014
(73) Patentinhaber: KNORR-BREMSE Systeme für Nutzfahrzeuge GmbH, 80809 München (DE)
(72) Erfinder: MELLAR, Jörg, 85652 Pliening (DE)
(86) Internationale Anmeldenummer: PCT/EP2012/074011
(87) Internationale Veröffentlichungsnummer: WO 2013/079625

(56) Entgegenhaltungen:
- EP-A1- 2 363 313
- EP-A2- 0 184 685
- DE-A1-102007 017 487

## Beschreibung

Die vorliegende Erfindung betrifft ein Verfahren zum Betreiben eines Aggregatsystems eines Nutzfahrzeugs umfassend ein von einem Antriebsmotor des Nutzfahrzeugs mechanisch angetriebenes Aggregat, ein Verbindungselement zur Übertragung mechanischer Antriebskraft von dem Antriebsmotor auf das Aggregat und eine Kupplung zur Unterbrechung der über das Verbindungselement auf das Aggregat übertragenen Antriebskraft, wobei das Aggregatsystem weiterhin zumindest ein Lager umfasst, das über einen Ölkreislauf des Antriebsmotors mit Öl geschmiert wird.
Die vorliegende Erfindung betrifft weiterhin ein Aggregatsystem eines Nutzfahrzeugs umfassend ein von einem Antriebsmotor des Nutzfahrzeugs mechanisch angetriebenes Aggregat, ein Verbindungselement zur Übertragung mechanischer Antriebskraft von dem Antriebsmotor auf das Aggregat und eine Kupplung zur Unterbrechung der über das Verbindungselement auf das Aggregat übertragenen Antriebskraft, wobei das Aggregatsystem weiterhin zumindest ein Lager umfasst, das über einen Ölkreislauf des Antriebsmotors mit Öl geschmiert ist.

Gattungemässe Verfahren zum Betreiben eines Aggregatsystems eines Nutzfahrzeugs und ein entsprechendes Aggregatsystem sind aus der EP 0 184 685 A2 bekannt. Nutzfahrzeuge verfügen in der Regel über eine ganze Reihe von Aggregaten, die direkt oder indirekt mit Hilfe eines Antriebsmotors des Nutzfahrzeugs angetrieben werden, wobei der Antriebsmotor des Nutzfahrzeugs zugleich Energie bereitstellt, die zum Vortrieb des Nutzfahrzeugs genutzt wird. Um eine möglichst einfache Energieübertragung von dem Antriebsmotor auf das Aggregat zu gewährleisten, wird das Aggregat in der Regel in der direkten Nachbarschaft des Antriebsmotors angeordnet. Die Schmierung von Lagerungen, beispielsweise einem zur EnergieÜbertragung von dem Antriebsmotor auf das Aggregat genutzten Verbindungselement, das beispielsweise als Welle und/oder Zahnrad ausgeführt sein kann, kann der Einfachheit halber mithilfe eines Ölkreislaufs des Antriebsmotors realisiert sein, der bereits die in dem Antriebsmotor selbst vorhandenen Lagerungen in bekannter Weise schmiert. Zu diesem Zweck kann eine Erweiterung des Ölkreislaufs des Antriebsmotors auf das Aggregat und/oder das das Aggregat antreibende Verbindungselement vorgesehen sein.

Problematisch an dieser Vorgehensweise sind die Verlängerungen der Zuläufe und Abläufe des Ölkreislaufs auf die Lagerungen des Verbindungselementes und/oder des Aggregates, da der Aufbau der Ölzirkulation innerhalb des erweiterten Ölkreislaufs aufgrund der verlängerten Fließwege in den Zu- und Abläufen eine längere Zeitspanne in Anspruch nimmt. Dies kann dazu führen, dass bei einer Inbetriebnahme des Antriebsmotors Lagerungen des Verbindungselementes und/oder des Aggregates bewegt werden, ohne dass diese ausreichend geschmiert sind. Ein solches "trockenes" Bewegen von Lagern kann zu einem erhöhten Verschleiß des angetriebenen Aggregates führen, der sich in einer verstärkten Abnutzung der zeitweise nicht ausreichend geschmiert bewegten Lager des Aggregatsystems bemerkbar machen kann.

Der Erfindung liegt die Aufgabe zugrunde, diesen Verschleiß zu reduzieren.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das gattungsgemäße Verfahren wird durch die vorliegende Erfindung dadurch weiterentwickelt, dass die Kupplung durch ein Steuersignal geschlossen wird, wenn eine Zeitspanne Δt nach einer Inbetriebnahme des Antriebsmotors verstrichen ist und/oder ein Mindestöldruck in dem Ölkreislauf vorliegt. Auf diese Weise kann eine Bewegung oder Belastung des Lagers erst erfolgen, wenn eine ausreichende Schmierung des Lagers sichergestellt ist. Dies kann durch ein gesteuertes zeitlich verzögertes Schließen der Kupplung realisiert werden, wobei die Kupplung erst nach dem Verstreichen einer Zeitspanne Δt nach der Inbetriebnahme des Antriebsmotors geschlossen wird. Alternativ oder zusätzlich hierzu kann der Schutz des Lagers vor Verschleiß auch durch das Messen eines Öldrucks in dem Ölkreislauf realisiert werden, der einen Mindestöldruck überschreiten muss, bevor die Kupplung durch ein Steuersignal geschlossen wird. Beide Möglichkeiten stellen eine ausreichende Versorgung des so geschützten Lagers des Aggregatsystems mit Öl sicher, bevor eine Bewegung oder Belastung des Lagers erfolgt. Dies reduziert den an dem Lager auftretenden Verschleiß. Das in dem Aggregatsystem vorhandene Lager kann beispielsweise eine Lagerung sein, an der zwei Teile gegeneinander drehend bewegt werden. Das Lager kann beispielsweise an dem Aggregat oder dem zum Antrieb des Aggregates verwendeten Verbindungselement, beispielsweise einer Welle und/oder einem Zahnrad, oder der Kupplung angeordnet sein. Spezielle Beispiele für das Lager sind im Zusammenhang mit der speziellen Ausführungsform des Aggregatsystems explizit angegeben. Das Lager kann entweder ständig mit dem Antriebsmotor gekoppelt sein oder durch die Kupplung von dem Antriebsmotor entkoppelbar sein. In beiden Fällen ist die Belastung des Lagers durch das Anlaufen des angetriebenen Aggregates besonders groß, so dass beim Anlaufen des Aggregates eine ausreichende Schmierung besonders wichtig ist. Als Schmierung mit Öl wird insbesondere die Ausbildung eines Ölfilms bezeichnet, welche die zwei in dem Lager gegeneinander bewegten Teile voneinander trennt, um den Verschleiß in dem Lager zu reduzieren. Unter der Inbetriebnahme des Antriebsmotors wird das Starten des Antriebsmotors mit dem Druckaufbau in dem Ölkreislauf des Antriebsmotors aus einem inaktiven deaktivierten Zustand verstanden. Ein nicht in Betrieb genommener Antriebsmotor befindet sich dementsprechend in Ruhe, so dass die einzelnen Bestandteile des Antriebsmotors ihre relative Position zueinander nicht ändern. Als Zeitpunkt für die Inbetriebnahme des Antriebsmotors kann die Erzeugung eines Signals "Zündung ein" durch eine Zündung des Nutzfahrzeugs, das Erreichen einer Leerlaufdrehzahl durch den Antriebsmotor oder ein anderes geeignetes und charakteristisches Kriterium sein.

Vorteilhafterweise kann vorgesehen sein, dass die aufgrund des Steuersignals geschlossene Kupplung geöffnet und offen gehalten wird, solange der Mindestöldruck in dem Ölkreislauf unterschritten wird. Dies dient ebenfalls der Vermeidung von unnötigem Lagerverschleiß und kann beispielsweise auch die Überhitzung einer nass laufenden Kupplung durch trockene oder unzureichend geschmierte Kuppelvorgänge verhindern. Es kann also durch das automatische Öffnen und Offenhalten der Kupplung eine Bewegung oder Belastung des Lagers bei nicht ausreichender Schmierung verhindert werden, so dass der an dem Lager auftretende Verschleiß reduziert wird. Der Öldruck kann auch während des Betriebs des Aggregatsystems plötzlich unter einen Mindestwert absinken, beispielsweise, wenn der Ölverbrauch durch andere in dem Nutzfahrzeug vorgesehene Komponenten geändert wird.

In diesem Zusammenhang kann vorgesehen sein, dass der Mindestöldruck bei einer Mindestöltemperatur oder -viskosität vorliegen muss. Die Berücksichtigung der Öltemperatur im Zusammenhang mit dem Öldruck kann zur Absicherung dienen, um zu vermeiden, dass ein ausreichender Öldruck vorliegt, der aber aufgrund von einer zu niedriger Öltemperatur und dadurch bedingten hohen Viskosität des Öls nicht zu einem tatsächlichen Ölzufluss zu dem zu schmierenden Lager führt. Dieses Phänomen kann besonders bei mit Ruß oder anderen Partikeln belasteten Ölen auftreten, wie sie nach einer gewissen Nutzungsdauer in Nutzfahrzeugen üblich sind.

Nützlicherweise kann vorgesehen sein, dass die Kupplung vor der Inbetriebnahme des Antriebsmotors geöffnet wird. Aus Sicherheitsgründen kann vorgesehen sein, dass die Kupplung eine geschlossene Ruhestellung aufweist. Das kann bei einem abgestellten Nutzfahrzeug zur Folge haben, dass das Lager des Aggregatsystems unter erhöhtem Verschleiß bei einer nicht ausreichenden Schmierung während der Inbetriebnahme des Antriebsmotors mitbewegt wird. Das Überführen der Kupplung in den geöffneten Zustand vor der Inbetriebnahme des Antriebsmotors kann daher eine Voraussetzung für eine Reduzierung des an dem Lager auftretenden Verschleißes sein.

Weiterhin kann vorgesehen sein, dass vor dem Öffnen der Kupplung überprüft wird, ob das Öffnen der Kupplung möglich ist. Die Überprüfung, ob das Öffnen der Kupplung überhaupt möglich ist, verhindert die Überführung der Kupplung in einen Zwischenzustand zwischen den klar definierten offenen und geschlossenen Betriebszuständen. Beispielsweise kann bei einer pneumatisch betätigten Kupplung ein zum Öffnen der Kupplung nicht ausreichender Versorgungsdruck vorhanden sein, der nicht ausreichend ist, die Kupplung aus dem geschlossenen Betriebszustand in den geöffneten Betriebszustand zu überführen. Wird das Öffnen der Kupplung dennoch eingeleitet, wird die Kupplung nicht vollständig geöffnet, so dass ein undefinierter Zwischenzustand entsteht, bei dem eine erhöhte Reibung innerhalb der Kupplung auftreten kann. Dieser Zwischenzustand kann, aufgrund der auftretenden hohen Reibung, die Kupplung innerhalb kürzester Zeit beschädigen oder zerstören und zu ihrem Ausfall führen. Die Überprüfung, ob das Öffnen der Kupplung möglich ist, schützt somit das Aggregatsystem vor Verschleiß und Beschädigungen. Eine Überprüfung, die ergeben hat, dass die Kupplung geöffnet werden kann, kann das Öffnen der Kupplung umfassen oder das Öffnen der Kupplung verursachen.

Das gattungsgemäße Aggregatsystem wird durch die vorliegende Erfindung dadurch weiterentwickelt, dass ein Steuergerät vorgesehen ist, das dazu eingerichtet ist, die Kupplung durch ein Steuersignal zu schließen, wenn eine Zeitspanne Δt nach einer Inbetriebnahme des Antriebsmotors verstrichen ist und/oder ein Mindestöldruck in dem Ölkreislauf vorliegt.

Die Vorteile und Besonderheiten des in den abhängigen Ansprüchen beschriebenen Verfahrens können in gleicher Weise auch im Rahmen eines Aggregatsystems umgesetzt werden.

Vorteilhafte Ausführungsformen und Besonderheiten des Aggregatsystems ergeben sich daher in gleicher Weise aus den abhängigen Vorrichtungsansprüchen und sind im Zusammenhang mit diesen angegeben.

Es kann beispielsweise vorgesehen sein, dass das Steuergerät dazu eingerichtet ist, die aufgrund des Steuersignals geschlossene Kupplung zu öffnen und offen zu halten, solange der Mindestöldruck in dem Ölkreislauf unterschritten ist.

Weiterhin kann auch vorgesehen sein, dass der Mindestöldruck bei einer Mindestöltemperatur oder -Viskosität vorliegen muss.

Von Vorteil kann auch sein, dass das Steuergerät dazu eingerichtet ist, die Kupplung vor der Inbetriebnahme des Antriebsmotors zu öffnen.

Ebenfalls kann es vorteilhaft sein, dass das Steuergerät dazu eingerichtet ist, vor dem Öffnen der Kupplung zu überprüfen, ob das Öffnen der Kupplung möglich ist.

Die Erfindung wird nun mit Bezug auf die begleitenden Zeichnungen anhand bevorzugter Ausführungsformen beispielhaft erläutert.

Es zeigen:
- Figur 1: ein Flussdiagramm für den Betrieb eines Aggregatsystems;
- Figur 2: ein Nutzfahrzeug mit einem ersten Aggregatsystem;
- Figur 3: eine schematische Darstellung eines Aggregatsystems;
- Figur 4: eine erste symbolhafte Darstellung zur Veranschaulichung eines Aggregatsystems; und
- Figur 5: eine zweite symbolhafte Darstellung zur Veranschaulichung einer Steuerung eines Aggregatsystems.

In den folgenden Zeichnungen bezeichnen gleiche Bezugszeichen gleiche oder gleichartige Teile.

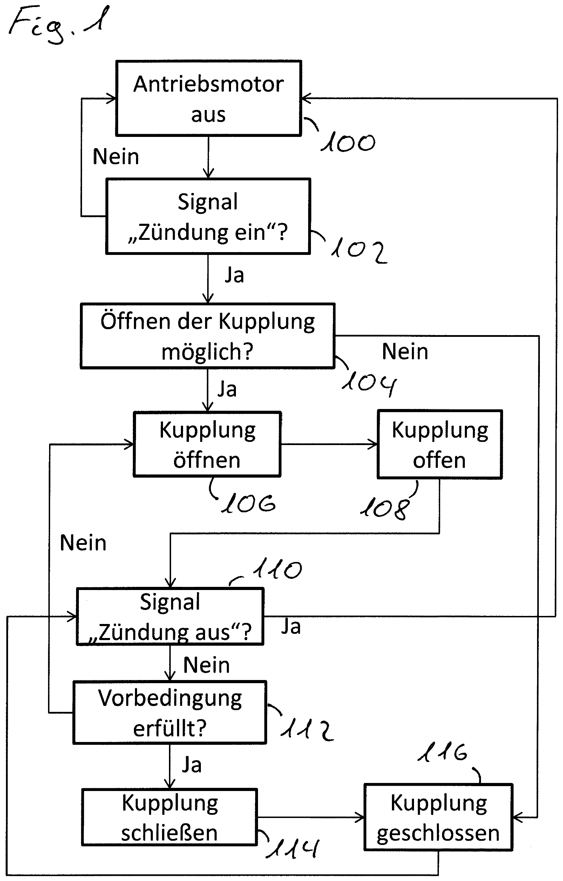

Figur 1 zeigt ein Flussdiagramm für den Betrieb eines Aggregatsystems. Ausgangspunkt ist Schritt 100 "Antriebsmotor aus". Der Antriebsmotor kann zum mechanischen Antrieb eines Aggregates des Aggregatsystems und gleichzeitig zum Antrieb des Nutzfahrzeugs dienen. Der Betriebszustand "Antriebsmotor aus" kann beispielsweise bei einem abgestellten Nutzfahrzeug vorkommen, dessen Antriebsmotor vollständig deaktiviert ist. Wenn der Antriebsmotor aus ist, das heißt deaktiviert ist, kann auch die Kupplung des Aggregatsystems geschlossen sein. Die Kupplung des Aggregatsystems kann aus Sicherheitsgründen eine geschlossene Ruhestellung aufweisen, um beispielsweise eine Inbetriebnahme des abgestellten Nutzfahrzeugs bei defekter Kupplungssteuerung zu ermöglichen. Im anschließenden Schritt 102 kann überprüft werden, ob das Signal "Zündung ein" vorliegt, falls nein, Schritt 102-Nein, ändert sich an dem allgemeinen Betriebszustand nichts, da zu Schritt 100 zurückgekehrt wird. Der Antriebsmotor bleibt deaktiviert und dementsprechend ist auch das Aggregatsystem an sich nicht aktiv. Falls das Signal "Zündung ein" vorliegt, Schritt 102-Ja, kann in Schritt 104 überprüft werden, ob das Öffnen der Kupplung möglich ist. Das Signal "Zündung ein" kann jedes Signal sein, das eine Inbetriebnahme des Antriebsmotors einleitet, beispielweise ein elektrischer Impuls, der durch das Betätigen einer Zündung des Nutzfahrzeugs erzeugt werden kann. Die Kupplung als Teil des Aggregatsystems kann beispielsweise pneumatisch betätigbar sein. Das Öffnen der Kupplung kann in diesem Fall nur zuverlässig erfolgen, wenn ein ausreichender Versorgungsdruck vorhanden ist. Wenn ein ausreichender Versorgungsdruck zum Öffnen der Kupplung vorhanden ist, so ist das Öffnen der Kupplung möglich, Schritt 104-Ja, und es kann bei Schritt 106 mit dem Öffnen der Kupplung fortgefahren werden. In Schritt 106, Kupplung öffnen, kann ein Signal zum Öffnen der Kupplung beziehungsweise das Öffnen der Kupplung erfolgen. Als Folge kann mit Schritt 108 fortgefahren werden, der den offenen Zustand der Kupplung des Aggregatsystems bezeichnet. Wenn festgestellt wird, dass das Öffnen der Kupplung in Schritt 104 nicht möglich ist, Schritt 104-Nein, kann bei Schritt 116 fortgefahren werden, da die Kupplung geschlossen bleibt und nicht geöffnet werden soll. Beispielsweise kann das Öffnen der Kupplung bei einem nicht ausreichenden Versorgungsdruck nicht möglich sein, wenn die Kupplung pneumatisch betätigbar ist. Durch den nicht ausreichenden Versorgungsdruck kann die zum vollständigen Öffnen der Kupplung notwendige Kraft nicht erzeugt werden, so dass dann die Kupplung zwar aus dem geschlossenen Schaltzustand entfernt, jedoch nicht vollständig in den offenen Schaltzustand überführt wird. Dieser undefinierte Zwischenzustand kann bei einer Bewegung der Kupplung durch einen hohen reibungs- und hitzebedingten Verschleiß an der Kupplung gekennzeichnet sein, der die Kupplung in kurzer Zeit beschädigen kann. Schritt 116 bezeichnet dementsprechend den geschlossenen Zustand der Kupplung.

Ausgehend von Schritt 108, dem geöffneten Zustand der Kupplung und Schritt 116, dem geschlossenen Zustand der Kupplung, kann jeweils mit Schritt 110 fortgefahren werden. In Schritt 110 wird überprüft, ob das Signal "Zündung aus" vorliegt. Durch das Signal "Zündung aus" kann beispielsweise der Antriebsmotor, der das Aggregatsystem antreibt, deaktiviert werden. Das Signal "Zündung aus" kann ein eigenständiges, von dem Signal "Zündung ein" verschiedenes Signal darstellen oder auch durch das Fehlen des Signals "Zündung ein" definiert sein. Wenn das Signal "Zündung aus" vorliegt, Schritt 110-Ja, kann mit Schritt 100, Antriebsmotor aus, das heißt dem ursprünglichen Ausgangspunkt, fortgefahren werden. Die Kupplung kann dann ebenfalls ihre Ruhestellung wieder einnehmen, die insbesondere geschlossen sein kann, wenn sie sich nicht bereits in der Ruhestellung befindet. Liegt das Signal "Zündung aus" nicht vor, Schritt 110-Nein, so kann in Schritt 112 überprüft werden, ob eine Vorbedingung erfüllt ist. Die Vorbedingung kann beispielweise das Verstreichen einer Zeitspanne Δt seit der Inbetriebnahme des Antriebsmotors durch das Signal "Zündung ein" sein. Alternativ oder zusätzlich kann die Vorbedingung auch das Vorliegen eines Mindestöldrucks in einem Ölkreislauf des Antriebmotors sein. Der Mindestöldruck kann beispielsweise mithilfe eines Drucksensors an dem Ölkreislauf bestimmt werden. Zusätzlich zu einem Mindestöldruck kann auch eine Mindestöltemperatur oder eine Mindestölviskosität als Vorbedingung vorgesehen sein. Die Temperatur und die Viskosität des Öls können ebenfalls in einfacher Weise durch geeignete Sensoren in dem Ölkreislauf des Antriebsmotors bestimmt werden. Es ist möglich, dass die Temperatur und/oder die Viskosität des Öls bereits als Signale auf dem CAN-Bus vorliegen, die von einem Steuergerät eines Aggregatsystems mit einem Anschluss an den CAN-Bus eingelesen werden können.

Ist die Vorbedingung erfüllt, Schritt 112-Ja, so kann in Schritt 114 die Kupplung geschlossen werden. Hiervon ausgehend kann bei Schritt 116 fortgefahren werden, der den geschlossenen Zustand der Kupplung bezeichnet.

Der zeitliche Ablauf der einzelnen Schritte, insbesondere die Detektion des Signals "Zündung ein" in Schritt 102 und das Öffnen der Kupplung in Schritt 106, können zeitlich so auf die Inbetriebnahme des Antriebsmotors abgestimmt sein, dass die Kupplung geöffnet wird, bevor der Antriebsmotor in Betrieb genommen wird. Auf diese Weise wird eine Bewegung oder Belastung des Lagers in dem Aggregatsystem vor einer Sicherstellung einer ausreichenden Schmierung des Lagers verhindert. Die Überprüfung, ob das Öffnen der Kupplung überhaupt möglich ist, in Schritt 104, sorgt in diesem Zusammenhang dafür, dass die Kupplung keine undefinierten Betriebszustände einnehmen kann. Insbesondere wird verhindert, dass die Kupplung eine Zwischenstellung zwischen der geschlossenen und der offenen Position einnehmen kann. Auf diese Weise kann das Auftreten einer stark erhöhten Reibung verhindert werden, die zu einer hohen Wärmeentwicklung in der Kupplung führen kann. Grundsätzlich kann die Kupplung geöffnet werden, wenn die Vorbedingung nicht erfüllt ist, Schritt 112-Nein. Auf diese Weise kann bei einer nicht ausreichenden Schmierung des Lagers, das Aggregatsystem vor einem verschleißbedingten Ausfall geschützt werden. Es ist denkbar während des Schritts 112-Ja, das Öffnen der Kupplung analog zu Schritt 104 durchzuführen.

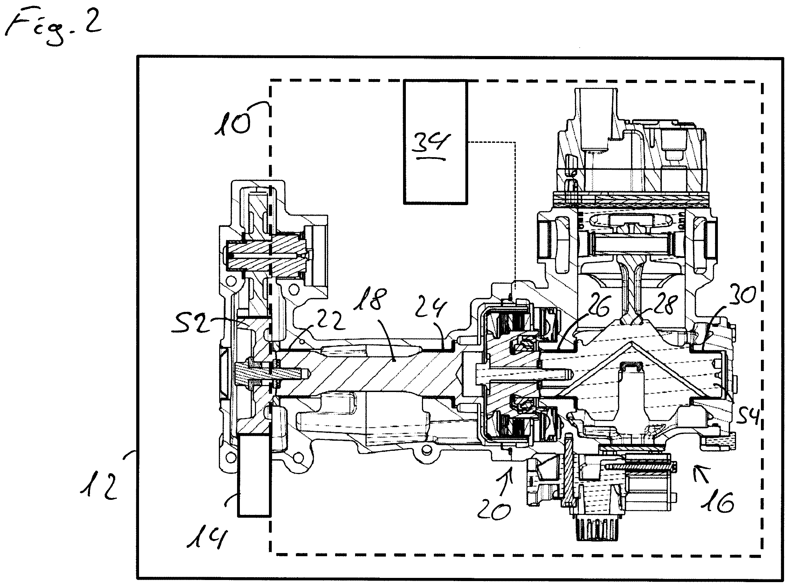

Figur 2 zeigt ein Nutzfahrzeug mit einem ersten Aggregatsystem. Das dargestellte Aggregatsystem 10 ist Bestandteil eines Nutzfahrzeugs 12, welches durch einen Antriebsmotor 14 angetrieben wird. Der Antriebsmotor 14 ist nicht als Bestandteil des Aggregatsystems 10 dargestellt, und diesem nicht zugerechnet. Der Antriebsmotor 14 kann ein Aggregat 16 über ein Verbindungselement, beispielsweise eine Welle 18, mechanisch antreiben. Das dargestellte Aggregat 16 kann beispielsweise einen Kompressor bezeichnen, der Druckluft erzeugen kann. Der Antriebsmotor 14 kann über Zahnräder 52 Drehmoment auf die Welle 18 übertragen, wodurch eine Kurbelwelle 54 des Aggregates 16 bewegt werden kann. Die Welle 18 ist optional und kann in einer nicht dargestellten alternativen Ausführungsform auch entfallen. Zumindest eines der Zahnräder 52 kann dann direkt an der Kupplung sitzen und kann bei dieser alternativen Ausführungsform als Verbindungselement aufgefasst werden. Das Verbindungselement kann ebenfalls derart ausgestaltet sein, dass es die Welle 18 und das Zahnrad 52 umfasst.

Zur Unterbrechung der mechanischen Kraftübertragung zwischen dem Antriebsmotor 14 und dem Aggregat 16 kann eine Kupplung 20 vorgesehen sein, die beispielsweise die Kurbelwelle 54 von der Welle 18 mechanisch entkoppeln kann. Die Kupplung kann direkt oder indirekt über ein Steuergerät 34 ansteuerbar sein. Die Kupplung 20 kann beispielsweise pneumatisch betätigbar sein, so dass das Steuergerät 34 pneumatische Schaltventile in geeigneter Weise betätigt, um die Kupplung 20 zu öffnen oder zu schließen. Die Ansteuerung der Kupplung 20 durch das Steuergerät 34 ist in Figur 2 lediglich schematisch angedeutet. Das Steuergerät 34 kann beispielsweise ein Steuergerät 34 einer dem Aggregat 16 nachgeordneten Druckluftaufbereitungsanlage sein. Das Steuergerät 34 kann im Zusammenhang mit der Druckluftaufbereitung weitere Funktionen steuern, beispielsweise eine Regenerationsfunktion eines nicht dargestellten Lufttrockners. Das Steuergerät 34 kann auch eine Motorsteuerung des Antriebsmotors 14 steuern. Das Aggregatsystem 10 kann ein erstes Lager 22 und ein zweites Lager 24 zur Lagerung der Welle 18 umfassen. Weiterhin kann das Aggregatsystem 10 ein drittes Lager 26, ein viertes Lager 28 und ein fünftes Lager 30 zur Lagerung der Kurbelwelle 54 und der an der Kurbelwelle 54 eventuell beweglich angeordneten Teile umfassen. Eine hiervon abweichende Anordnung oder Verwendung der Lager 22, 24, 26, 28, 30 innerhalb des Aggregatsystems 10 ist möglich. Beispielsweise kann bei der oben bereits erwähnten, nicht dargestellten alternativen Ausführungsform, die ohne die Welle 18 realisiert ist, das Lager 22 in die Kupplung 20 integriert sein während das Lager 24 entfallen kann.

Bei dem Aggregatsystem 10 kann es zwei Arten von radial und/oder axial beanspruchten Lagern 22, 24, 26, 28, 30 geben. Das sind das der Kupplung 20 vorgeschaltete erste Lager 22 und das zweite Lager 24, die immer mitlaufen, wenn der Antriebsmotor 14 in Betrieb ist. Die übrigen Lager, das heißt das dritte Lager 26, das vierte Lager 28 und das fünfte Lager 30 sind der Kupplung 20 nachgeschaltet, so dass sie nur dann mitlaufen, wenn das Aggregat 16 zugeschaltet ist. Insbesondere während des Zuschaltvorgangs beim Schließen der Kupplung 20 und beim Anlaufen des Aggregates 16 kommt es zu sehr hohen dynamischen Lasten an den Lagern 22, 24, 26, 28, 30 mit Kontakt und damit Mischreibung zwischen den feststehenden und den beweglichen Teilen der Lager 22, 24, 26, 28, 30. Das Durchfahren des Mischreibungsgebietes und der direkte Kontakt, besonders wenn bereits ein erhöhter Schmutzanteil in dem vorhandenen Öl vorliegt, ist nachteilig da es zu erhöhtem Verschleiß der Lager 22, 24, 26, 28, 30 kommen kann oder eben entsprechende Robustheit verbessernde Maßnahmen erfordert, die sehr kostenintensiv sein können. Schmutzanteile mit bis zu 3 Prozent Volumenanteil des Öls sind nicht unüblich, wobei als Schmutz hauptsächlich Ruß vorkommt. Eine ausreichende Schmierung kann jedoch den Verschleiß auch bei stark verschmutztem Öl deutlich reduzieren.

Weiterhin werden bei der beschriebenen Ausführungsform insbesondere das zweite Lager 24 und das dritte Lager 26, die beide direkt an die Kupplung 20 angrenzen, im Moment der Betätigung der Kupplung 20 schlagartig in axialer Richtung beansprucht. Auch hier kann die bereits erwähnte Mischreibung durch eine ausreichende Schmierung vermieden werden.

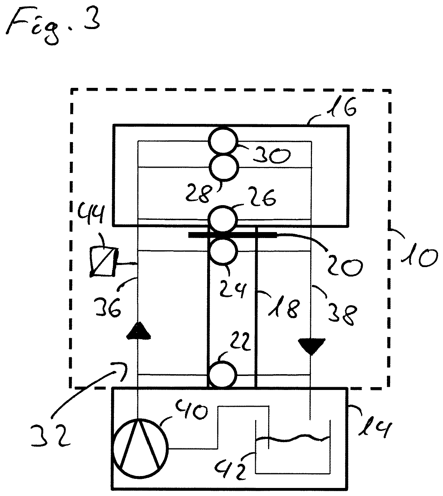

Figur 3 zeigt eine schematische Darstellung eines Aggregatsystems. Das in Figur 3 dargestellte Aggregatsystem 10 zeigt neben dem Aggregat 16, der Welle 18 und der Kupplung 20 insbesondere einen Ölkreislauf 32, der ausgehend von dem Antriebsmotor 14 einen Zulauf 36 von einer Ölpumpe 40 mit Öl versorgt. Die Ölpumpe 40 sowie ein Ölsumpf 42, aus dem die Ölpumpe 40 Öl ansaugt, sind als integraler Bestandteil des Antriebsmotors 14 dargestellt, da der Antriebsmotor 14 üblicherweise nicht ohne Ölkreislauf 32 dauerhaft funktionsfähig sein kann. Ausgehend von dem Zulauf 36 kann Öl zu dem ersten Lager 22, dem zweiten Lager 24, dem dritten Lager 26, dem vierten Lager 28 und dem fünften Lager 30 geführt werden. Die Kupplung 20 kann ebenfalls ausgehend vom Zulauf 36 mit Öl versorgt sein. Überschüssiges Öl kann ausgehend von den Lagern 22, 24, 26, 28 und 30 über einen Rücklauf 38 in den Ölsumpf 42 rückströmen. Wenn auch die Kupplung 20 mit Öl versorgt wird, kann überschüssiges Öl auch von dort über den Rücklauf 38 in den Ölsumpf 42 zurückströmen. Die in der Figur dargestellte parallele Versorgung ist nur beispielhaft zu verstehen. Der zur Schmierung verwendete Ölkreislauf 32 kann alternativ auch eine serielle Versorgung oder eine Mischform aus serieller und paralleler Versorgung zur Schmierung vorsehen. An dem Zulauf 36 kann beispielsweise ein Drucksensor 44 angeordnet sein. Auf den Drucksensor 44 kann beispielsweise verzichtet werden, wenn ein entsprechendes Öldrucksignal von einem nicht explizit dargestellten, am Antriebsmotor 14 bereits vorhandenen Öldrucksensor ausgelesen werden kann oder wenn ein entsprechendes Öldrucksignal auf dem CAN-Bus bereits vorhanden ist und ausgelesen werden kann. Je nach Bedarf können weitere in Figur 3 nicht explizit dargestellte Drucksensoren an unterschiedlichen Stellen des Ölkreislaufs 32 vorgesehen sein oder der dargestellte Drucksensor 44 innerhalb des Ölkreislaufs verschoben werden. Weiterhin können ein oder mehrere Temperatursensoren an unterschiedlichen Stellen des Ölkreislaufs 32 angeordnet werden. Ebenso ist es möglich, an unterschiedlichen Stellen einen Sensor oder mehrere Sensoren zur Bestimmung der Viskosität des von der Ölpumpe geförderten Öls vorzusehen. Sensoren zur Bestimmung der Temperatur und der Viskosität des Öls können insbesondere an demselben Abschnitt des Zulaufs 36 angeordnet sein, an dem bereits der Drucksensor 44 angeordnet ist. Der Zulauf 36 des Ölkreislaufs 32 kann weiterhin bei Bedarf zur Kühlung des Aggregates 16 vorgesehen sein, wenn entsprechende Ölführungen in den Ölkreislauf 32 integriert werden.

Die Ölversorgung über den Zulauf 36 kann beispielsweise durch eine Verbindung zwischen einem Hauptölkanal des Aggregates 16 und einer Motorölgalerie des Antriebsmotors 14 hergestellt werden. Es besteht also eine Abhängigkeit zwischen dem Öldruckaufbau in den Lagern 22, 24, 26, 28, 30 und der Versorgung anderer Lagerstellen am Antriebsmotor 14. Dadurch kann ein ausreichender Ölfluss erst einige Zeit nach Start des Antriebsmotors 14 zur Verfügung stehen, insbesondere bei Kälte. Das Aggregat 16, beispielsweise ein Kompressor, sollte erst bei einem ausreichenden Ölfluss zugeschaltet werden, um eine ausreichende Schmierung aller Lager 22, 24, 26, 28, 30 zu gewährleisten und die oben beschriebenen schädlichen Verschleißerscheinungen an den Lagern 22, 24, 26, 28, 30 möglichst gering zu halten. Wenn die Kupplung 20 ebenfalls ausgehend vom Zulauf 36 mit Öl versorgt wird, sollte zusätzlich auch auf einen ausreichenden Ölfluss an der Kupplung geachtet werden, um auch an dieser Stelle die erwähnten Verschleißerscheinungen möglichst gering zu halten.

Aufgrund der unterschiedlichen Abstände der Lager 22, 24, 26, 28, 30 und der eventuell ebenfalls an den Ölkreislauf 32 angeschlossen Kupplung 20 von der Ölpumpe 40 wird an den einzelnen Lagern 22, 24, 26, 28, 30 und der Kupplung 20 ein mit dem Abstand zur Ölpumpe abfallender Öldruck bereitgestellt. Dieser Druckabfall kann insbesondere bei einer seriellen Versorgung durch den Ölkreislauf 32 verstärkt auftreten. Dies kann in geeigneter Weise bei der Positionierung des Drucksensors 44, der Festlegung des Zeitintervalls Δt und der Festlegung des Mindestöldrucks berücksichtigt werden.

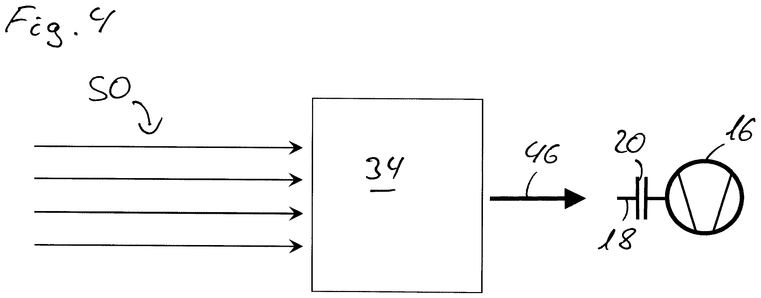

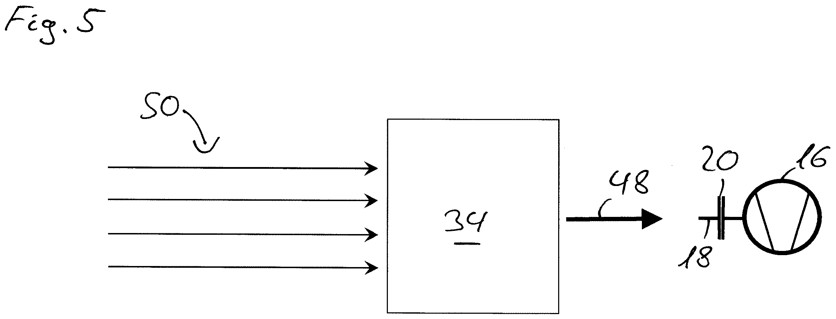

Figur 4 zeigt eine erste symbolhafte Darstellung zur Veranschaulichung einer Steuerung eines Aggregatsystems und Figur 5 zeigt eine zweite symbolhafte Darstellung zur Veranschaulichung einer Steuerung eines Aggregatsystems. Dargestellt in den Figuren 4 und 5 sind Eingangsgrößen 50, die dem Steuergerät 34 zugeführt werden. In Abhängigkeit von den Werten der zugeführten Eingangsgrößen 50 kann das Steuergerät 34 ein Steuersignal "Kupplung öffnen" 46 oder ein Steuersignal "Kupplung schließen" 48 erzeugen, durch das die Kupplung 20 öffnet oder schließt, so dass das Aggregat 16 von der Welle 18 mechanisch entkoppelt wird. Die Eingangsgrößen können beispielsweise den Öldruck, die Öltemperatur, das Signal "Zündung ein" und/oder einen Kreisdruck zur Kupplungsbetätigung, falls die Kupplung druckluftbetätigbar ist, umfassen. Der Zugang zu den Motorparametern Öldruck und Öltemperatur kann beispielsweise über einen Anschluss an den CAN-Bus des Nutzfahrzeugs gewährleistet werden. Denkbar ist auch, in dem Aggregatsystem eigene Sensoren zur Bestimmung der Eingangsgrößen vorzusehen. In Abhängigkeit von den erhaltenen oder ermittelten Eingangsgrößen kann das Betätigen der Kupplung 20 beispielsweise dynamisch oder statisch bei der Inbetriebnahme des Antriebsmotors bestimmt werden. Eine dynamische Bestimmung der Verzögerung kann beispielsweise basierend auf dem Öldruck erfolgen und eine statische Bestimmung kann beispielsweise basierend auf einem vorgebbaren Zeitintervall Δt erfolgen. Idealerweise kann die Verarbeitung der Eingangsgrößen 50 und das Erzeugen und Aussenden der Steuersignale 46, 48 von einem bereits in dem Nutzfahrzeug vorhandenen Steuergerät 34 durchgeführt werden, beispielsweise dem Steuergerät eines elektronischen Druckluftaufbereitungssystems. In dem Druckluftaufbereitungssystem werden bereits üblicherweise einige softwaregestützte Funktionen dargestellt, die Kenntnisse des Druckluftsystems erfordern. Prinzipiell können aber auch andere Steuergeräte, soweit sie die benötigten Eingangsgrößen berücksichtigen und ein entsprechendes Steuersignal erzeugen können, benutzt werden.

Als unterer Grenzwert für den Öldruck kann beispielsweise 1 bar festgelegt werden. Dieser Mindestöldruck muss dann in dem Ölkreislauf überschritten werden, um das Schließen der Kupplung zu erlauben. Als unterer Grenzwert für die Öltemperatur kann beispielsweise -30 °C festgelegt werden. Dieser Grenzwert für die Öltemperatur muss zusätzlich zu dem Mindestöldruck von beispielsweise 1 bar überschritten werden, um ein Schließen der Kupplung zu erlauben. Die Berücksichtigung der Öltemperatur zusätzlich zu dem Öldruck ist optional. Alternativ zu der Öltemperatur kann auch direkt die Viskosität des Öls ermittelt werden, die direkt mit der Öltemperatur korreliert ist. Auch die Berücksichtigung der Viskosität ist optional.

Anstatt des Öldrucks und eventueller weiterer Größen aus dem Ölkreislauf kann auch das Verstreichen eines vorgebbaren Zeitintervalls Δt nach der Inbetriebnahme des Antriebsmotors abgewartet werden, bis die geöffnete Kupplung geschlossen werden darf. Diese Vorgehensweise kann beispielsweise gewählt werden, wenn kein Zugang zu den Motorparametern Öldruck und Öltemperatur besteht. Das Zeitintervall Δt entspricht einer Einschaltverzögerung, die als fester Wert bezogen auf den Startvorgang des Antriebsmotors oder einen anderen relevanten und charakteristischen Vorgang am Beginn des Druckaufbaus im Ölkreislauf gesetzt werden kann. Das Öffnen der Kupplung kann auch basierend auf dem Signal "Zündung ein" vor der Inbetriebnahme des Antriebsmotors erfolgen, wenn die Kupplung in ihrer Ruhestellung geschlossen ist. Dies wurde bereits im Zusammenhang mit der Verwendung eines Mindestöldrucks beschrieben. Die Einschaltverzögerung dient zur Absicherung, um zunächst einen tatsächlichen Ölzufluss zu dem Lager zu gewährleisten. Der tatsächliche Ölzufluss kann erfahrungsgemäß erst bis zu 30 Sekunden nach dem Start des Antriebsmotors einsetzen. Bedingt durch die Komfortansprüche des Fahrzeugführers kann die für das Zeitintervall Δt gewählte Verzögerungszeit von einer aus Sicht der Ölversorgung idealen Zeitspanne kürzer gewählt werden. Beispielsweise kann sie anstelle von 30 Sekunden nur 15 Sekunden betragen. Auch bei dieser verkürzten Zeitspanne kann der Verschleiß noch stark reduziert werden.

Die Eingangsgröße 50 kann auch das Signal "Zündung ein" umfassen. Wenn das Signal "Zündung ein" vorliegt, kann zunächst sofort die Kupplung geöffnet werden, wenn dies möglich ist. Beispielsweise kann hierfür ein ausreichender Versorgungsdruck in einem Druckluftvorratsbehälter notwendig sein, wenn die Kupplung druckluftbetätigbar ist. Ein Mindestschaltdruck kann beispielsweise 6,5 bar betragen. Zum Öffnen der Kupplung kann vorgesehen sein, dass der bereitgestellte Versorgungsdruck den Mindestschaltdruck überschreiten muss.

### Bezugszeichenliste

- 10: Aggregatsystem
- 12: Nutzfahrzeug
- 14: Antriebsmotor
- 16: Aggregat
- 18: Welle
- 20: Kupplung
- 22: erstes Lager
- 24: zweites Lager
- 26: drittes Lager
- 28: viertes Lager
- 30: fünftes Lager
- 32: Ölkreislauf
- 34: Steuergerät
- 36: Zulauf
- 38: Rücklauf
- 40: Ölpumpe
- 42: Ölsumpf
- 44: Drucksensor
- 46: Steuersignal "Kupplung öffnen"
- 48: Steuersignal "Kupplung schließen"
- 50: Eingangsgröße
- 52: Zahnrad
- 54: Kurbelwelle
- 100: Antriebsmotor aus
- 102: Signal "Zündung ein"?
- 104: Öffnen der Kupplung möglich?
- 106: Kupplung öffnen
- 108: Kupplung offen
- 110: Signal "Zündung aus"?
- 112: Vorbedingung erfüllt?
- 114: Kupplung schließen
- 116: Kupplung geschlossen

## Patentansprüche

1. Verfahren zum Betreiben eines Aggregatsystems (10) eines Nutzfahrzeugs (12) umfassend
- ein von einem Antriebsmotor (14) des Nutzfahrzeugs (12) mechanisch angetriebenes Aggregat (16),
- ein Verbindungselement zur Übertragung mechanischer Antriebskraft von dem Antriebsmotor (14) auf das Aggregat (16) und
- eine Kupplung (20) zur Unterbrechung der über das Verbindungselement auf das Aggregat (16) übertragenen Antriebskraft, wobei die Kupplung (20) in Ruhestellung geschlossen ist, und
- wobei das Aggregatsystem (10) weiterhin zumindest ein Lager (22, 24, 26, 28, 30) umfasst, das über einen Ölkreislauf (32) des Antriebsmotors (14) mit Öl geschmiert wird,
**dadurch gekennzeichnet,**
- **dass** die Kupplung (20) vor der Inbetriebnahme des Antriebsmotors (14) geöffnet wird,
- **dass** die Kupplung (20) durch ein Steuersignal geschlossen wird, wenn eine Zeitspanne Δt nach einer Inbetriebnahme des Antriebsmotors (14) verstrichen ist und/oder ein Mindestöldruck in dem Ölkreislauf (32) vorliegt.

2. Verfahren nach Anspruch 1, **dadurch gekennzeichnet, dass** die aufgrund des Steuersignals geschlossene Kupplung (20) geöffnet und offen gehalten wird, solange der Mindestöldruck in dem Ölkreislauf (32) unterschritten wird.

3. Verfahren nach Anspruch 1 oder 2, **dadurch gekennzeichnet, dass** der Mindestöldruck bei einer Mindestöltemperatur oder -viskosität vorliegen muss.

4. Verfahren nach einem der vorhergehenden Ansprüche, **dadurch gekennzeichnet, dass** vor dem Öffnen der Kupplung (20) überprüft wird, ob das Öffnen der Kupplung (20) möglich ist.

5. Aggregatsystem (10) eines Nutzfahrzeugs (12) umfassend
- ein von einem Antriebsmotor (14) des Nutzfahrzeugs (12) mechanisch angetriebenes Aggregat (16),
- ein Verbindungselement zur Übertragung mechanischer Antriebskraft von dem Antriebsmotor (14) auf das Aggregat (16) und
- eine Kupplung (20) zur Unterbrechung der über das Verbindungselement auf das Aggregat (16) übertragenen Antriebskraft, wobei die Kupplung (20) in Ruhestellung geschlossen ist, und
- wobei das Aggregatsystem (10) weiterhin zumindest ein Lager (22, 24, 26, 28, 30) umfasst, das über einen Ölkreislauf (32) des Antriebsmotors (14) mit Öl geschmiert ist,
**dadurch gekennzeichnet,**
- **dass** das Steuergerät (34) dazu eingerichtet ist, die Kupplung (20) vor der Inbetriebnahme des Antriebsmotors (14) zu öffnen,
- **dass** ein Steuergerät (34) vorgesehen ist, das dazu eingerichtet ist, die Kupplung (20) durch ein Steuersignal zu schließen, wenn eine Zeitspanne Δt nach einer Inbetriebnahme des Antriebsmotors (14) verstrichen ist und/oder ein Mindestöldruck in dem Ölkreislauf (32) vorliegt.

6. Aggregatsystem (10) nach Anspruch 5, **dadurch gekennzeichnet, dass** das Steuergerät (34) dazu eingerichtet ist, die aufgrund des Steuersignals geschlossene Kupplung (20) zu öffnen und offen zu halten, solange der Mindestöldruck in dem Ölkreislauf (32) unterschritten ist.

7. Aggregatsystem (10) nach einem der Ansprüche 5 oder 6, **dadurch gekennzeichnet, dass** der Mindestöldruck bei einer Mindestöltemperatur oder -viskosität vorliegen muss

8. Aggregatsystem (10) nach einem der Ansprüche 5 bis 7, **dadurch gekennzeichnet, dass** das Steuergerät (34) dazu eingerichtet ist, vor dem Öffnen der Kupplung (20) zu überprüfen, ob das Öffnen der Kupplung (20) möglich ist.

## Claims

1. Method for operating a power train system (10) of a commercial vehicle (12) comprising
- a power train (16) which is driven mechanically by a drive motor (14) of the commercial vehicle (12),
- a connecting element for transmitting mechanical traction force from the drive motor (14) to the power train (16), and
- a clutch (20) for interrupting the traction force which is transmitted via the connecting element to the power train (16), the clutch (20) being closed in the neutral position, and
- the power train system (10) comprising, furthermore, at least one bearing (22, 24, 26, 28, 30) which is lubricated with oil via an oil circuit (32) of the drive motor (14),
**characterised in that**
- the clutch (20) is opened before starting the drive motor (14),
- the clutch (20) is closed by way of a control signal if a time period Δt has passed after starting up of the drive motor (14) and/or a minimum oil pressure prevails in the oil circuit (32).

2. Method according to claim 1, **characterised in that** the clutch (20), which is closed on the basis of the control signal, is opened and held open as long as the minimum oil pressure is undershot in the oil circuit (32).

3. Method according to claim 1 or 2, **characterised in that** the minimum oil pressure has to prevail at a minimum oil temperature or viscosity.

4. Method according to any of the preceding claims, **characterised in that,** before the clutch (20) is opened, a check is made as to whether the opening of the clutch (20) is possible.

5. Drive train system (10) of a commercial vehicle, comprising
- a power train (16) which is driven mechanically by a drive motor (14) of the commercial vehicle (12),
- a connecting element for transmitting mechanical traction force from the drive motor (14) to the power train (16), and
- a clutch (20) for interrupting the traction force which is transmitted via the connecting element to the power train (16), the clutch (20) being closed in the neutral position, and
- the power train system (10) comprising, furthermore, at least one bearing (22, 24, 26, 28, 30) which is lubricated with oil via an oil circuit (32) of the drive motor (14),
**characterised in that**
- the control unit (34) is arranged to open the clutch (20) before starting the drive motor (14),
- a control unit (34) is provided which is arranged to close the clutch (20) by way of a control signal if a time period Δt has passed after starting up of the drive motor (14) and/or a minimum oil pressure prevails in the oil circuit (32).

6. Power train system (10) according to claim 5, **characterised in that** the control unit (34) is arranged to open and hold open the clutch (20), which is closed on the basis of the control signal, as long as the minimum oil pressure is undershot in the oil circuit (32).

7. Power train system (10) according to claim 5 or 6, **characterised in that** the minimum oil pressure has to prevail at a minimum oil temperature or viscosity.

8. Power train system (10) according to any of claims 5 to 7, **characterised in that** the control unit (34) is arranged to check before the clutch (20) is opened as to whether the opening of the clutch (20) is possible.

## Revendications

1. Procédé pour faire fonctionner un système (10) d'agrégat d'un véhicule (12) utilitaire, comprenant
- un agrégat (16) entraîné mécaniquement par un moteur (14) d'entraînement du véhicule (12) utilitaire,
- un élément de liaison pour transmettre la force d'entraînement mécanique du moteur (14) d'entraînement à l'agrégat (16) et
- un accouplement (20) pour interrompre la force d'entraînement transmise à l'agrégat (16) par l'intermédiaire de l'élément de liaison, l'accouplement (20) étant fermé en une position de repos et
- dans lequel le système (10) d'agrégat comprend, en outre, au moins un palier (22, 24, 26, 28, 30), qui est lubrifié par de l'huile par l'intermédiaire d'un circuit (32) d'huile du moteur (14) d'entraînement,
**caractérisé**
- **en ce que** l'accouplement (20) est ouvert avant la mise en service du moteur (14) d'entraînement,
- **en ce que** l'accouplement (20) est fermé par un signal de commande, s'il s'est écoulé un laps de temps Δt après une mise en service du moteur (14) d'entraînement et/ou s'il y a une pression d'huile minimum dans le circuit (32) d'huile.

2. Procédé suivant la revendication 1, **caractérisé en ce que** l'accouplement (20), fermé sur la base du signal de commande, est ouvert et est maintenu ouvert tant que l'on est en dessous de la pression d'huile minimum dans le circuit (32) d'huile.

3. Procédé suivant la revendication 1 ou 2, **caractérisé en ce que** la pression d'huile minimum doit être présente à une température ou à une viscosité minimum de l'huile.

4. Procédé suivant l'une des revendications précédentes, **caractérisé en ce que**, avant l'ouverture de l'accouplement (20), on contrôle si l'ouverture de l'accouplement (20) est possible.

5. Système (10) d'agrégat d'un véhicule (12) utilitaire comprenant
- un agrégat (16) entraîné mécaniquement par un moteur (14) d'entraînement du véhicule (12) utilitaire,
- un élément de liaison pour transmettre la force d'entraînement mécanique du moteur (14) d'entraînement à l'agrégat (16) et
- un accouplement (20) pour interrompre la force d'entraînement transmise à l'agrégat (16) par l'intermédiaire de l'élément de liaison, l'accouplement (20) étant fermé en une position de repos et
- dans lequel le système (10) d'agrégat comprend, en outre, au moins un palier (22, 24, 26, 28, 30), qui est lubrifié par de l'huile par l'intermédiaire d'un circuit (32) d'huile du moteur (14) d'entraînement,
**caractérisé**
- **en ce que** l'appareil (34) de commande est conçu pour ouvrir l'accouplement avant la mise en service du moteur (14) d'entraînement,
- **en ce qu'**il est prévu un appareil (34) de commande conçu pour fermer l'accouplement (30) par un signal de commande, s'il s'est écoulé un laps de temps Δt après une mise en service du moteur (14) d'entraînement et/ou s'il y a une pression d'huile minimum dans le circuit (32) d'huile.

6. Système (10) d'agrégat suivant la revendication 5, **caractérisé en ce que** l'appareil (34) de commande est conçu pour ouvrir l'accouplement (20) fermé sur la base du signal de commande et le maintenir ouvert tant que l'on est en dessous de la pression minimum d'huile dans le circuit (32) d'huile.

7. Système (10) d'agrégat suivant l'une des revendications 5 ou 6, **caractérisé en ce que** la pression d'huile minimum doit être présente à une température ou à une viscosité minimum de l'huile

8. Système (10) d'agrégat suivant l'une des revendications 5 à 7, **caractérisé en ce que** l'appareil (34) de commande est conçu pour contrôler, avant l'ouverture de l'accouplement (20), si l'ouverture de l'accouplement (20) est possible.
